# EUROPEAN PATENT APPLICATION

(11) **EP 4 737 357 A1**
(43) Date of publication of application: **06.05.2026**
(21) Application number: 24209821.8
(22) Date of filing: 30.10.2024
(51) Int. Cl.: B65G 1/04

(54) **RACK GUIDED ASRS**

(71) Applicant: Dematic Pte. Ltd., Singapore 409835 (SG)
(72) Inventor: YAMASHITA, Shin, 469600 Singapore (SG); CHEUNG MEI SAI, Steve, 417101 Singapore (SG)
(74) Representative: Moser Götze & Partner Patentanwälte mbB

(57) **Abstract**

Storage comprising at least two multi-level storage racks with an aisle in between and at least one automated storage and retrieval machine (ASRS) that runs on and is guided by at least two travel rails that run longitudinally in parallel to scaffolding of one of the racks and facing the aisle at differing levels to service the length and height of both racks, one travel rail located at the top or near top of the rack, and one travel rail located on the upper half of the rack, wherein the ASRS comprises a vertical ladder-type mast with cross beams, a bifacial load handling means travelling vertically along the mast for loading and unloading items to sides of the aisle, a top trolley located in the top area of the mast for engaging the upper travel rail of the at least two travel rails and an intermediate trolley located in the upper half of the mast for engaging the intermediate travel rail of the at least two travel rails, at least one of the trolleys is driven, wherein the travel rails are fixed to longitudinal support rails of the scaffolding of the rack which supports the stored loads.

## Description

The invention relates to a storage comprising at least two multi-level storage racks with an aisle in between and at least one automated storage and retrieval machine (ASRS) according to claim 1.

Automated storage and retrieval machines (ASRS), also referred to as stacker cranes, handle the automatic storage and retrieval of conveyance goods in storages, i. e. automatic mini-load or unit-load warehouses and automatic pallet high-bay warehouses, regardless of whether storage is single, double or multi-deep.

These devices have a mast extending the height of the racks that travels along a travel rail(s) attached on the single side of rack and depends on variant on the floor in the aisle between two racks and is depending on height usually also guided and supported at the top or near top of one or both side of the racks. They have a load handling means that travels vertically along the mast for placing loads into storage bays or retrieving such. Usually, these load handling means can operate to both sides of the aisle, i.e. interface with both racks of an aisle. In some embodiments, the mast is a dual mast (ladder-type frame), which supports the load handling means or carriage at both sides of the frame.

The mast connects to the trolley for running on the rail and to the head crossbeam for guidance. Depending on the application, single or double mast versions are possible. The lifting carriage is guided along the mast. However, the mast may also contain other components such as the hoist with the rope or chain drive, the main control cabinet, platforms and access ladders with the personal protective equipment (PPE), power supply lines to the main control cabinet and to the lifting carriage via conductor lines or cable chains.

Usually, an ASRS is installed for each rack aisle. Changing the rack aisle would require a considerably more complex design and significantly increase the access times to a storage bay. Nevertheless, they are however manufactured known, as so called 'curve-going' ASRS. Pairs of ASRS are also useful for each aisle, one dedicated to each rack.

It is not only the desired operating time that determines the choice of solutions, but also payloads, building heights, storage strategies, etc.

The head crossbeam contains the upper trolley and connects the two masts if necessary. The upper trolley consists of guide rollers that are guided in a rail on the rack yoke (upper connecting structure of the rack rows). In the case of single mast units that cannot negotiate curves, the top cross beam can sometimes even be omitted.

To simplify the mast and reduce the weight of the ASRS it is known to provide a rack-guided ASRS, in which the ASRS is lightweight and is guided and runs on rails that are arranged on the face of the rack itself. Such ASRS with guides on the rack top and bottom areas are for example known from Libiao Robotic (see EP 4 286 065 A1 Figure 2; https://www.libiaorobot.eom/en/solution#item1) or Blue Sword (see https://www.youtube.com/watch?v=Xh59rFxtDiw ; https://www.voutube.com/watch?v=3dc Ut2KDYA).

These systems include a lightweight double mast on which a shuttle-type load handling carriage travels, wherein the mast runs on a bottom rail and a top rail and is also guided and supported by an intermediate rail that are all supported by and connected to the rack itself.

This construction allows the rack to carry part of the loads so that the ASRS itself can be made light weight.

Object of the invention is to improve the mechanical stability of such ASRS.

This object is achieved by the storage of claim 1.

In accordance with the invention an inventive storage comprising at least two multi-level storage racks with an aisle in between and at least one automated storage and retrieval machine (ASRS) that runs on and is guided by at least two travel rails that run longitudinally in parallel to scaffolding of one of the racks and facing the aisle at differing levels to service the length and height of both racks, one rail travel located at the top or near the top of the rack, and one travel rail located on the upper half of the rack, wherein the ASRS comprises a vertical ladder-type mast with cross beams, a bifacial load handling means travelling vertically along the mast for loading and unloading items to sides of the aisle, a top trolley located in the top area of the mast for engaging the upper travel rail of the at least two travel rails and an intermediate trolley located in the upper half of the mast for engaging the intermediate travel rail of the at least two travel rails, at least one of the trolleys is driven, has the travel rails fixed to longitudinal support rails of the scaffolding of the rack which supports the stored loads.

In contrast to the prior art, where the travel rails are connected to the upright, this allows for simple but sturdy implementation without deflection.

In other words, by connecting the travel rails to the support beams of the racking the travel rails are stiffened and become structurally capable of carrying high loads, even though they themselves are light weight.

In a preferred embodiment, the travel rails and longitudinal support rails of the scaffolding are connected by a Z-shaped bracket. This strengthens the connection.

It is also possible that the travel rails and longitudinal support rails of the scaffolding are bolted to each other.

The storage will have at least two travel rails on different levels. However, usually the storage will have four or more, depending on and increasing with height of the rack. As such, a preferred embodiment will include a third bottom area travel rail located at the bottom area of the rack and a bottom trolley located in the lower area of the mast for engaging the bottom area travel rail. This rail can be either also fixed to the support beam of the scaffolding for implementations in which the loads are mini loads, such as trays, totes, cartons etc. For more heavy weight implementations, such as pallets, the bottom area travel rail is fixed to the floor for better load transfer of the increased weight.

For power supply and possibly also data exchange, at least one travel rail may contain a bus bar for power supply to the ASRS using the corresponding trolley, preferably at least two travel rails may contain bus bars, which the ASRS may use to receive power and/or data (instructions) and to exchange data with a higher level control. Using more than one rail for the bus bar is beneficial as then the loss of height due to the required vertical space for bus bar can be improved. The bus bars will be arranged within the section of the rails such that collectors can contact them, which will usually be from below for C-profiles. It is also possible to have the bus bars outside of the rails or within dedicated bus bar only rails.

As the ASRS is connected and runs along the face of the rack facing the aisle, the aisle becomes narrower or must be widened. Therefore, it is beneficial that the cross beams of mast are positioned to face rack and positioned to coincide with the longitudinal support rails of the scaffolding of the rack, so as to at least save some space.

If the travel rails are u-shaped and wheels of trolleys may run therein, they not only have a running surface with an integrated guide but also some height is saved.

By having a second top trolley that is connected to a top traverse that extends from the mast to the other rack across the aisle that has a corresponding travel rail located at the top of the rack therefore, it is possible to partially transfer weight load to the other rack of the aisle and use four wheels (trolleys).

Due to the ladder-type mast, it is beneficial if there are more than four trolleys per mast and/or the trolleys have positions on mast that alternate left and right in longitudinal direction of the rack. Especially the alternating trolleys may be the drive trolleys that are controlled and driven by an electromotor that uses the bus bar to receive power and data (instructions) for the onboard low-level controller.

To allow for tolerances and movements of the racks, the lower trolleys may have variable rate spring loaded wheels. The top and also maybe the bottom trolleys may have springless (or harder spring) wheels for better load transfer to the rack scaffolding. The trolley wheels may be bogie wheels with a frame that carries a wheelset. This may also be implemented with a swivel.

The trolleys may have a pair of spaced guiding rollers that are guided by an outer vertical flange of the travel rails that is situated in the space between the guiding rollers to ensure straight travel along the travel rails even when these are C-profiles and the wheels run on the top "open" surface.

All the trolleys may be driven or only some of the trolleys may be driven and then they may also alternate left and right on the mast in longitudinal direction of the rack (aisle). Some of the driven trolleys may be put in idle when positioning is performed and the drive to be put in idle can be selected (chosen) depending on the load handling means target height/level. In this way, synchronizing multiple drives, which is challenging especially when it comes to positioning, is not necessary. The idle drive/trolley will just follow the actively driven trolley and stay passive. For example, if the load handling means will access the rack in a middle level, the driven trolley at the middle level should remain active. On the other hand, that middle level drive might likely become idle for most of the time as bottom and top drives/trolleys are usually the most important ones.

The load handling means will travel verticals up and down the mast and then place goods into the storage bays formed by support beams of the scaffolding of the rack etc. Obviously, the load handling means is also implemented to likewise retrieve goods. This can be performed to both racks of the aisle even though the ASRS is located at one of the two racks. The goods can be transferred using known telescopic extending means such as carriages with load handling telescopes such as known from EP 2 351 698 A1 or US 6,932,612 B2 etc.

It has been recognized that if the transport units have vertical ribs located in respective opposite walls configured to allow interaction with the load handling means of the ASRS, it is possible to "grab" the transport units from the side rather than pushing and pulling from behind/front. This in turn allows a gapless storage of the transport units, which increases reach of servicing machine and space usage in the rack.

Such gapless storage has additional advantages in that the transport units abutting each other stabilize the respective positions as no space for movement exists between the goods carriers reducing shifting.

Beneficially the transport units have at least a pair of vertical ribs, one in each end area of the wall. This eases storage and retrieval, as the ribs may be used in different ways. For example, the rear rib in travel direction may be used for storage of the transport units, i.e. pushing them off the ASRS, allowing for deeper storage if necessary.

Whereas the front ribs may be used for retrieval of the transport units, i.e. pulling them onto the ASRS, allowing for shorter extension of the load handling means of the ASRS, saving cycle time and minimizing ASRS aisle width. The transport unit with at least a pair of vertical ribs are very popular widely available in the market so no special transport unit design or purchasing is needed.

It is also preferred that the load handling means of the ASRS includes a load carrying area for carrying at least one transport unit, the load carrying area having telescopic arms (load handling means) arranged on opposite sides and each configured with at least two fingers that can change between a retracted non-use position and an extended, preferably essentially horizontally orientated, use position using a movement mechanism. The fingers may be configured to engage the vertical ribs in the use position. To do so, it is preferred that the fingers are swivable by a movement mechanism and have an extension such that the fingers engage the transport units in the extended position from the side. In other words, the fingers are short enough to contact the transport units on the side when rotated into the use position.

The load handling means may be suspended from one or both vertical beams of the ladder-type mast.

If the goods stored and retrieved by the ASRS are heavy weight goods, like pallets, it is beneficial that the ASRS has a tensioning means (steel rope, belt etc.) running between the top area and bottom area of the mast and connected (reeved around distance variable rollers of the load handling carriage) to the load handling means such that a counter-acting force is generated that counters deflection of load handling means. It is also possible to implement two tensioning means; one to counter act the extension of the carriage into the rack where the ASRS is running and one to counter act the extension of the carriage into the rack across the aisle, where the necessary counter action is larger due to the longer length of the "lever".

Usually, the storage will have several aisles with corresponding racks left and right. Then it becomes possible to use an adjacent rack, that this arranged back-to-back and attached to the ASRS carrying rack for counter acting the lever generated tilting force by having the additional ASRS of the neighboring aisle being attached to the back-to-back rack so as to generate an opposite tilting force and/or the opposite rack will be free of loading from the machine so that it can be simpler and lighter.

Throughput for an aisle can be increased by adding an additional ASRS in the same aisle but attached to the other rack. In other words, such an ASRS would be implemented identical to the other ASRS but run along the face of the other rack.

Controlled by control the stored loads are placed to overhang the frontal support beam of the scaffolding of the rack closest to the aisle such that the loads stick out of the racking into the aisle bit only so far as to not interfere with the ASRS running along the face of the rack.

Controlled by control the stored loads may also be reduced on those levels where the support beams and travel rails are located so as to not cause overloading. The reduction can be achieved by the control only allowing storage of light weight goods in these storage spaces or by allowing storage with more distance between goods.

Further features and details of the invention will be apparent from the description hereinafter of the drawing, in which
- Figure 1: shows a schematic side view of a storage comprising at least two multi-level storage racks with an aisle in between and at least one automated storage and retrieval machine (ASRS);
- Figure 2: shows a schematic top view of a storage of figure 1;
- Figure 3: shows a schematic front view in direction of an aisle of the storage of figure 1;
- Figure 4: shows details of the mast and load handling means of the ASRS of figure 1;
- Figure 5: shows a schematic front view in direction of an aisle of a variation of the storage of figure 1;
- Figure 6: shows a side view of figure 5;
- Figure 7: shows a schematic view of the load handling means.

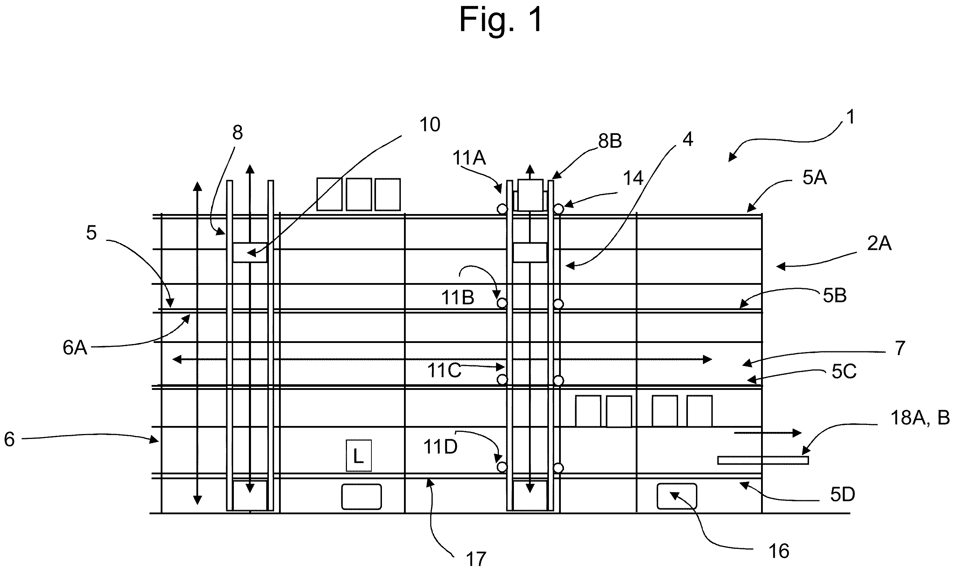

Figures 1-3 show a storage denoted with 1 comprising at least two multi-level storage racks 2A, B with an aisle 3 in between them. Per aisle 3 at least one automated storage and retrieval machine (ASRS) 4 runs on and is guided by travel rails 5 that run longitudinally in parallel to scaffolding 6 of one of the racks 2A, which face the aisle 3 at differing levels 7, to service the length and height of both racks 2A, B.

One travel rail 5A is located at the top of the rack 2A and a second travel rail 5B is located on the upper half of the rack 2A and a third travel rail 5C is located on the lower half of the rack 2A. A fourth bottom area travel rail 5D is located at the bottom area of the rack 2A.

The ASRS 4 comprises a vertical ladder-type mast 8 with cross beams 9 bridging vertical beams 8B of the mast 8 and a bifacial load handling means 10 travelling vertically along and supported by vertical beams 8B of the mast 8 for loading and unloading items to sides of the aisle 3 to service storage bays in both racks 2A, B. The bifacial load handling means 10 has a carriage that is vertically positionable by drives 10A, that are arranged at the top of the vertical beams 8B and use toothed belts etc. to vertically position the carriage.

The bifacial load handling means 10 uses telescopes to push transport units into the racks or pull transport units (loads L) onto a carriage of the load handling means 10, wherein the telescopes are extendable sides of the aisle 3 into the racks 2, in a known manner.

The ASRS 4 includes for each vertical beam 8B of the mast 8 a top trolley 11A located in the top area of the mast 8 for engaging the upper travel rail 5A and two intermediate trolleys 11B, C located in the upper half and lower half of the mast 8 for engaging the intermediate travel rails 5B, C of the at least two travel rails and a bottom trolley 11D located in the lower area of the mast 8 for engaging the bottom area travel rail 5D.

All of the trolleys 11 can be driven and to that extent include a respective drive 25. Alternatively, only some of the trolleys 11 may be driven and then they may also alternate left and right on the mast 8 in longitudinal direction of the rack 2A (aisle 3). Some of the driven trolleys 11 may be put in idle when positioning of the ASRS along the rack 2A is performed and the respective unused drives that are put in idle can be selected (chosen) depending on the load handling means 10 targeted level 7. In this way, synchronizing multiple drives of the trolleys 11, which is challenging especially when it comes to exact positioning, is not necessary. The idle drive/trolley(s) 11 will just follow the actively driven trolley and stay passive. For example, if the load handling means 10 will access the middle level and needs to be positioned accordingly, the driven trolley 11B, C at the middle level should remain active. On the other hand, that middle level driven trolley 11B, C might likely become idle for most of the time as bottom and top drives/trolleys 11A, D are usually the most important ones for normal operation.

The travel rails 5 are fixed to longitudinal support rails 6A of the scaffolding 6 of the rack 2A, which supports the stored transport units or loads L.

All the lower travel rails 5B-D and respective longitudinal support rails 6A of the scaffolding 6 are connected to each other by multiple Z-shaped brackets 12 distributed in longitudinal direction and are bolted together.

The wheels 14 of the trolleys 11B-D run on the top of the rails 5B-D, which have a C-shaped section.

The intermediate travel rail 5C and lower travel rail 5D both contain a bus bar 13 for power supply to the ASRS 4 using the corresponding trolleys 11C, D. The respective collectors are not shown.

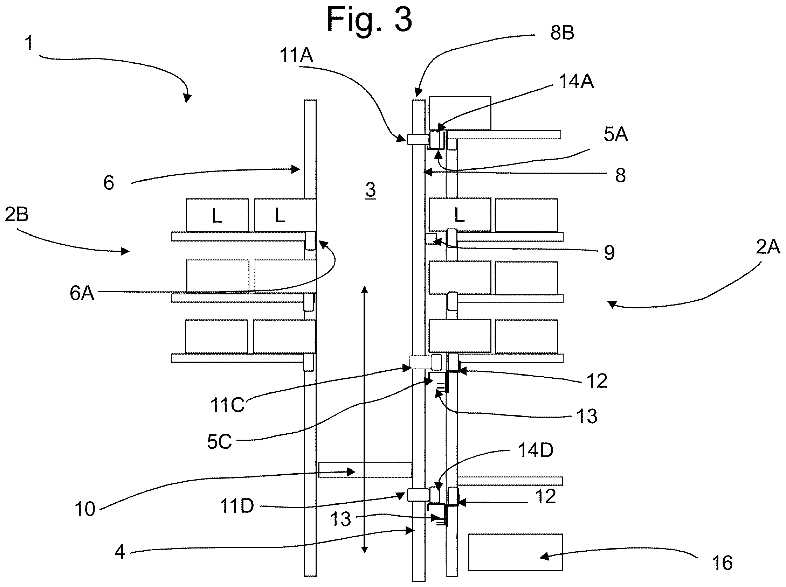

The cross beams 9 of mast 8 are positioned to face the rack 2A and positioned to coincide with the longitudinal support rails 6A of the scaffolding 6 of the rack 2A (to better indicate this, in figure 3, the trolley 11B is omitted).

The top travel rails 5A are u-shaped in section and wheels 14 of trolleys 11A run therein. The top rails 5A are bolted directly to the respective longitudinal support rails 6A.

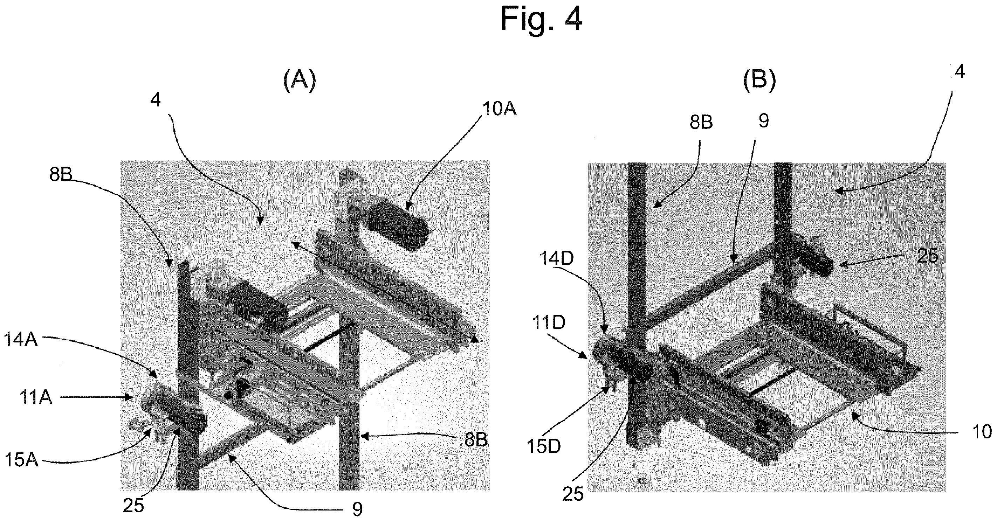

As indicated in figures 4A and 4B, showing a top area and a bottom area of the ASRS 4, the wheels 14B-D of the lower trolleys 11B-D have variable rate spring loaded supports 15B-D and wheels 14A and the top trolleys have springless supports 15A.

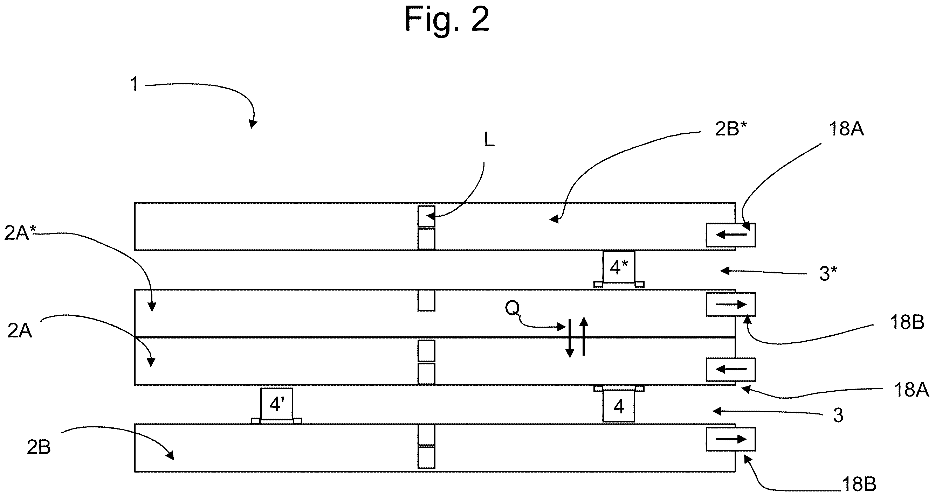

As indicated in figure 2, an additional adjacent aisle 3* may also have a further ASRS 4* for the that aisle 3*. It will use the rack 2A* that is arranged back-to-back with the rack 2A of the first aisle 3 and the ASRS 4, 4* are both attached to the back-to-back racks 2A, 2A* such that the loads are balanced.

As also indicated in Figure 2, an additional ASRS 4' may be present in the same aisle 3 but attached to the other rack 2B, such that the ASRS may pass each other by controlling the vertical position of the load handling means 10.

Figure 2 also depicts an inter aisle exchange between the adjacent aisles 2, 2* by exchanging loads L between the back-to-back racks 2A, 2A* by pushing these through the racks from one rack 2A to the other rack 2A*, or vice versa using the load handling means 10 of the ASRS 4, 4* at locations Q.

Alternatively, as depicted in figure 1, floor-bound AMR 16 may travel beneath the racks 2 and receive and discharge loads L from the lowest rack storage level 17 by using an integrated height-adjustable load carrying platform.

Each aisle 3 or respective rack 2 is connected to an inbound conveyor 18A or outbound conveyor 18B for interfacing the storage 1 with the rest of the warehouse where it is implemented to store and buffer low to medium weight loads or transport units L, such as totes, containers or trays and cartons.

As best seen in figure 3, controlled by a control the stored loads L are placed to overhang the frontal support beam 6A of the scaffolding of the rack 2A closest to the aisle 3 such that the loads L stick out of the racking into the aisle 3 bit only so far as to not interfere with the ASRS 4 running along the face of the rack 2A. In other word, the loads L overhang the frontal support beam 6A.

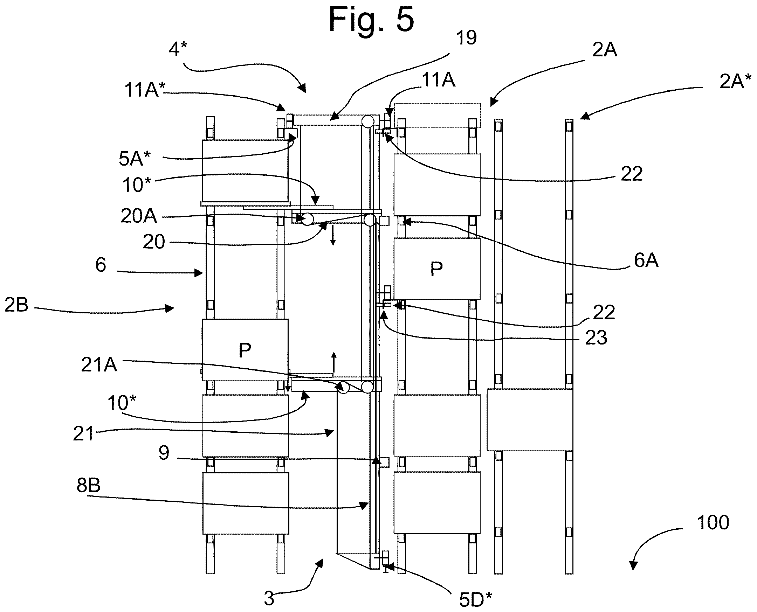

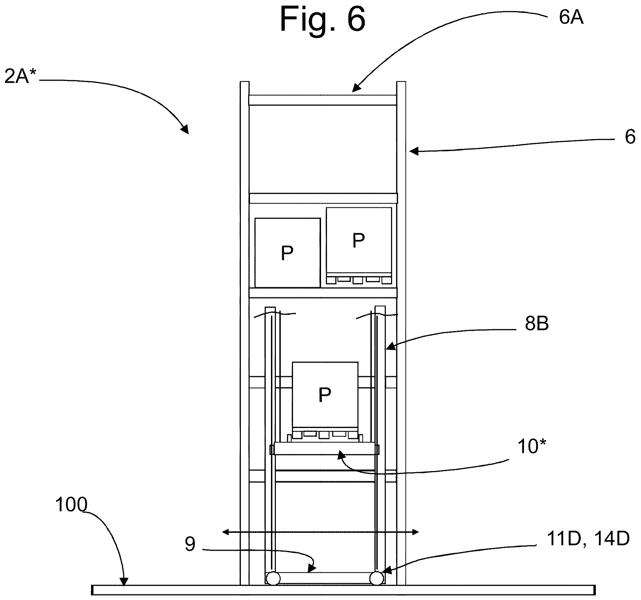

Figures 5 and 6 show a variant ASRS 4* of the above ASRS that is implemented for heavier weight carrying units like pallets P. In figure 5, the load handling means 10* is shown twice to better indicate certain features, but it is to be understood that the ASRS 4* only has a single load handling means 10*.

To compensate for the higher weight, in contrast to above, not all travel rails are fixed to the scaffolding of the rack, but the corresponding bottom area travel rail 5D* is fixed to the floor 100.

Additionally, a second top trolley 11A* is connected to a top traverse 19 that extends from the mast 8 to the other rack 2B across the aisle 3 that has a corresponding travel rail 5A* located at the top of the rack 2B.

The ASRS 4* has a first tensioning means 20 in the form of a steel rope running between the top area of the second top trolley 11A* at the top traverse 19 and bottom area of the mast 8 and connected (reeved around distance variable rollers 20A of the load handling carriage) to the load handling means 10* such that a counter-acting force is generated that counters deflection of load handling means 10* as it is supported in a cantilevered manner by the offset of the mast 8 located closer to one side of rack and in addition, it extends into the rack to counter-act the extension of the carriage into the rack 2B across the aisle. To counter-act the smaller cantilevered force when extension of the carriage into the rack 2A is made where the ASRS 4* is running a second tensioning means 21 in the form of a steel rope running between the top area of the mast 8 and bottom area of the mast 8 and connected (reeved around distance variable rollers 21A of the load handling carriage) to the load handling means 10 may be introduced.

In contrast to the above embodiment, the load handling means 10* of ASRS 4* do not use telescopes and fingers but rather an extendable fork 10*A for handling the palettes P.

Shown in figure 5 only for a single trolley and rail, but applicable to any embodiment and any trolley or rail, the trolleys 11 have a pair of spaced guiding rollers 22 that are guided by an outer vertical flange 23 of the travel rails 5 that is situated in the space to ensure straight travel along the travel rails 5 even when these are C-profiles and the wheels run on the top "open" surface.

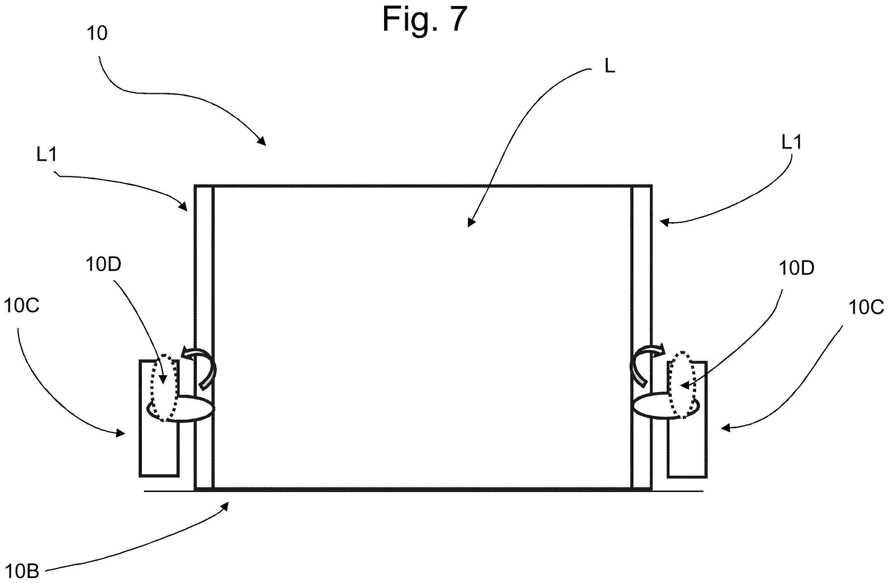

Figure 7 shows a schematic view of the load handling means 10 interacting with the transport units L having vertical ribs L1 located in respective opposite walls L2 configured to allow interaction with the load handling means 10 of the ASRS 4. The load handling means 10 of the ASRS 4 includes a load carrying area 10B for carrying at least one transport unit L.

The load carrying area 10B having telescopic arms 10C arranged on opposite sides and each configured with at least two fingers 10D that can change between a retracted non-use position (hashed - pointing upward) and an extended, preferably essentially horizontally orientated, use position using a movement mechanism (not shown).

The fingers 10D are configured to engage the vertical ribs L1 in the use position. To do so, the fingers are swivable by the movement mechanism and have an extension such that the fingers 10D engage the transport units L in the extended position from the side.

Therefore, it is possible to "grab" the transport units L from the side rather than pushing and pulling from behind/front. This in turn allows a gapless storage of the transport units, which increases reach of ASRS and space usage in the rack. Such gapless storage has additional advantages in that the transport units L abutting each other stabilize the respective positions as no space for movement exists between the goods carriers reducing shifting.

The transport units L have at least a pair of vertical ribs L1, one in each end area of the wall L2. This eases storage and retrieval, as the ribs L1 may be used in different ways. The rear rib L1 in travel direction may be used for storage of the transport units L, i.e. pushing them off the ASRS 4, allowing for deeper storage if necessary.

Whereas the front ribs L1 may be used for retrieval of the transport units L, i.e. pulling them onto the ASRS 4, allowing for shorter extension of the load handling means 10 of the ASRS 4, saving cycle time and minimizing ASRS aisle 3 width.

## Claims

1. Storage comprising at least two multi-level storage racks with an aisle in between and at least one automated storage and retrieval machine (ASRS) that runs on and is guided by at least two travel rails that run longitudinally in parallel to scaffolding of one of the racks and facing the aisle at differing levels to service the length and height of both racks, one travel rail located at the top or near top of the rack, and one travel rail located on the upper half of the rack, wherein the ASRS comprises a vertical ladder-type mast with cross beams, a bifacial load handling means travelling vertically along the mast for loading and unloading items to sides of the aisle, a top trolley located in the top area of the mast for engaging the upper travel rail of the at least two travel rails and an intermediate trolley located in the upper half of the mast for engaging the intermediate travel rail of the at least two travel rails, at least one of the trolleys is driven,
**characterized in that** the travel rails are fixed to longitudinal support rails of the scaffolding of the rack which supports the stored loads.

2. Storage according to claim 1 **characterized in that** the travel rails and longitudinal support rails of the scaffolding are connected by a Z-shaped bracket.

3. Storage according to claim 1 **characterized in that** the travel rails and longitudinal support rails of the scaffolding are bolted to each other.

4. Storage according to any preceding claim **characterized by** a third bottom area travel rail located at the bottom area of the rack and a bottom trolley located in the lower area of the mast for engaging the bottom area travel rail.

5. Storage according to claim 4 **characterized in that** all travel rails are fixed to the scaffolding of the rack or the bottom area travel rail is fixed to the floor.

6. Storage according to any preceding claim **characterized in that** at least one travel rail contains a bus bar for power supply to the ASRS using the corresponding trolley, preferably at least two travel rails contain bus bars.

7. Storage according to any preceding claim **characterized in that** the cross beams of the mast are positioned to face the rack and positioned to coincide with the longitudinal support rails of the scaffolding of the rack.

8. Storage according to any preceding claim **characterized in that** the travel rails are u-shaped and wheels of trolleys run therein.

9. Storage according to any preceding claim **characterized by** having a second top trolley that is connected to a top traverse that extends from the mast to the other rack across the aisle that has a corresponding travel rail located at the top of the rack therefore.

10. Storage according to any preceding claim **characterized by** having more than four trolleys per mast.

11. Storage according to any preceding claim characterized that the trolleys are all driven or only some of the trolleys are driven and alternate left and right on the mast in longitudinal direction of the rack.

12. Storage according to claim 11, **characterized in that** the driven trolleys are partially put in idle when positioning is performed and the driven trolley to be put in idle is selected depending on the load handling means targeted height.

13. Storage according to any preceding claim **characterized in that** lower trolleys have variable rate spring loaded wheels and/or top and/or bottom trolleys have springless or harder spring wheels and/or the trolley wheels are bogie wheels with a frame that carries a wheelset.

14. Storage according to any preceding claim **characterized in that** trolleys have a pair of spaced guiding rollers that are guided by an outer vertical flange of the travel rails that is situated in the space.

15. Storage according to any preceding claim **characterized in that** the load handling means is suspended from one or both vertical beams of the ladder-type mast.

16. Storage according to any preceding claim **characterized in that** the ASRS has a tensioning means (steel rope, belt etc.) running between the top area and bottom area of the mast and connected (reeved around distance variable rollers of platform) to the load handling means such that a counter-acting force is generated that counters deflection of load handling means.

17. Storage according to any preceding claim **characterized by** an additional adjacent aisle with two multi-level storage racks with the adjacent aisle in between and at least one further automated storage and retrieval machine for the that aisle, wherein the one of the racks is arranged back-to-back with one of the racks of the first aisle and the ASRS are both attached to the back-to-back racks.

18. Storage according to any preceding claim **characterized by** an additional ASRS in the same aisle but attached to the other rack.
